Europäisches Patentamt

European Patent Office

Office européen des brevets

(19)

(11) Veröffentlichungsnummer: **0 045 939**
**B1**

(12) **EUROPÄISCHE PATENTSCHRIFT**

(45) Veröffentlichungstag der Patentschrift:
18.07.84

(21) Anmeldenummer: 81106113.4

(22) Anmeldetag: 05.08.81

(51) Int. Cl.³: **C 02 F  3/02,** C 02 F  3/20, C 02 F  3/22

(54) Vorrichtung zur Belüftung des häuslichen und/oder industriellen Abwassers.

(30) Priorität: 12.08.80  DE 3030416

(43) Veröffentlichungstag der Anmeldung:
17.02.82 Patentblatt 82/7

(45) Bekanntmachung des Hinweises auf die Patenterteilung:
18.07.84 Patentblatt 84/29

(84) Benannte Vertragsstaaten:
FR GB IT NL SE

(56) Entgegenhaltungen:
AT - B - 291 134
AT - B - 336 517
DE - A - 1 658 148
DE - B - 2 832 274

(73) Patentinhaber: Neumann, Georg, Parkweg 27,
D-2807 Achim (DE)

(72) Erfinder: Neumann, Georg, Parkweg 27, D-2807 Achim
(DE)

(74) Vertreter: Eisenführ & Speiser, Martinistrasse 24,
D-2800 Bremen 1 (DE)

## Beschreibung

Die Erfindung betrifft eine Anordnung zur Belüftung des häuslichen und/oder industriellen Abwassers in der Abwasserdruckleitung eines Abwassersystems oder einer Kläranlage mit einer eine Verengung und eine Ansaugöffnung in der Abwasserdruckleitung aufweisenden Vorrichtung, wobei die Ansaugöffnung aus mehreren am Umfang eines Saugrohres verteilten Saugöffnungen besteht.

Bei den bekannten Abwassersystemen für häusliche und industrielle Abwässer münden die von den einzelnen Häusern herkommenden Anschlüsse in Gefälleleitungen, welche das Abwasser bei nicht ausreichendem Freigefälle bis zur Kläranlage in eine Pumpstation leiten, wobei die Abwässer etwa 1 bis 2 Stunden unterwegs sind. Im Pumpraum verweilen die Abwässer etwa 10 bis 20 Minuten bis zum nächsten Pumpzyklus, mit dem die Pumpe die Abwässer in die anschließende Druckleitung gibt. Aufgrund der oftmals großen Längen verweilt das Abwasser in den Druckleitungen bis zu 4, ja sogar 6 Stunden. Der aerobe Abbau des Abwassers setzt schon in der Gefälleleitung ein und endet in der Regel wegen der relativ großen Verweildauer im Kanalsystem wegen Sauerstoffmangels in den Druckleitungen. Das Abwasser gelangt dann in Hauptsammelleitungen, es wird toxisch und kommt angefault an den Kläranlagen an. Neben der unerwünschten Belastung der Kläranlagen durch angefaultes Abwasser ist es insbesondere nachteilig, daß das Abwasser schon in den Druckleitung unangenehm riecht und diesen Geruch durch die Kanalschächte nach außen abgibt.

Um diese Nachteile zu beseitigen, ist es bekannt, zwischen Druckleitungen und Hauptsammelleitung in bestimmten Fällen künstliche Belüftungsbecken anzubringen, in die mittels Kompressoren Luft eingeblasen wird. Dadurch wird zwar der aerobe Abbau des Abwassers fortgesetzt, und es kann unter Umständen ein Anfaulen des Wassers verhindert werden. Nachteilig dabei ist jedoch der sehr große Aufwand, der beim Bau und Betrieb eines derartigen Belüftungsbeckens anfällt. Aufgrund der Herstellungs- und Wartungskosten, sowie des Platzbedarfs und der damit verbundenen Umweltbelastung ist auch diese Lösung unbefriedigend.

Aus der AT-B-336 517 ist eine Einrichtung zur Behandlung von Flüssigkeiten bekannt, bei der in einen Abwasserstrom Belüfter in Form von Saugrohren eingebaut sind, die an ihrer Verengung rundum mit Ansaugöffnungen für Luft versehen sind. Dabei werden die zu behandelnden Flüssigkeiten in Form eines von einem Hauptstrom abgezweigten Teilstromes durch einen Fallkanal über eine Kontaktstelle mit einer Behandlungsflüssigkeit oder einem Behandlungsgas zur Einleitung eines chemischen oder biologischen Prozesses zu einem Behälter geführt, wobei durch die Ansaugöffnungen im Bereich des engsten Querschnitts des Fallkanals durch die bewegte Flüssigkeit die Behandlungsflüssigkeit und/oder das Behandlungsgas angesaugt und in der Flüssigkeit bläschenförmig verteilt wird. Die bekannte Einrichtung weist im engsten Querschnitt des Fallkanals Röhrchen mit einem engen Durchtrittsquerschnitt auf, die die Wandung des Fallkanals durchdringen und die mit ihrem Auslaßende für das zuzuführende Gas und/oder die Flüssigkeit zur Einleitung des biologischen oder chemischen Prozesses in einen Bereich hoher Flüssigkeitsgeschwindigkeit innerhalb des Fallkanals hineinreichen. Trotz zahlreicher Ansaugöffnungen ist die Reaktionsfläche mit der zu behandelnden Flüssigkeit nicht in jedem Falle ausreichend, so daß auch hier zur Intensivierung der Reaktion zusätzliche Aggregate, Kompressoren o. dergl. einzusetzen sind.

Aufgabe der vorliegenden Erfindung ist es, eine Anordnung zur Belüftung des häuslichen und/oder industriellen Abwassers in der Abwasserdruckleitung eines Abwassersystems oder einer Kläranlage zu schaffen, die in einfacher und zuverlässiger Weise ohne zusätzliche Aggregate einen starken Luft- oder Sauerstoffeintrag in das Abwasser bei geringem Raum- und Wartungsbedarf ermöglicht.

Diese Aufgabe wird erfindungsgemäß dadurch gelöst, daß die Ansaugöffnung stromabwärts hinter der Verengung in dem das Ende der Abwasserdruckleitung bildenden, einsetzbaren Saugrohr angeordnet ist und sich stromabwärts hinter dem Saugrohr eine Wirbelstrecke zur Verteilung der angesaugten Luft an die Abwasserdruckleitung sowie hinter der Wirbelstrecke eine offene Fallstrecke anschließt.

Die erfindungsgemäße Lösung stellt in einfacher und zuverlässiger Weise ohne zusätzliche Aggregate wie Kompressoren oder Pumpen einen starken Luft- oder Sauerstoffeintrag in das Abwasser bei geringem Raum- und Wartungsbedarf sicher. Als zentraler Bestandteil ist dabei ein Saugrohr vorgesehen, daß in den Abwasserkanal in geeigneter Weise eingefügt werden kann und eine Verengung besitzt, stromabwärts hinter der eine oder mehrere Ansaugöffnungen in der Rohrwand vorgesehen sind. Die Verengung des Saugrohres dient zur Erhöhung der Strömungsgeschwindigkeit des Abwassers im Bereich der Verengung. Der mit erhöhter Geschwindigkeit an den Saugöffnungen vorbeiströmende Abwasserstrom saugt dann eine besonders große Menge an Luft an. Die mit der Luft dem Abwasser zugesetzte Sauerstoffmenge beträgt bei optimaler Auslegung der Form und Anzahl an Saugöffnungen etwa 2 bis 2,2 mg/l und ist somit etwa so groß wie bei einer Abwasserbearbeitung im Belebungsbecken. Der auf diese Weise eingetragene Sauerstoff reagiert mit den im Abwasser enthaltenden Stoffen und setzt den aeroben Abbau des Abwassers fort. Dadurch wird das Auftreten von Sulfiden im Wasser verhindert, die mittelfristig zu einer Zerstörung des Rohrleitungsmaterials führen würden. Die erfindungsgemäße Vorrichtung wird dazu an geeigneter Stelle, bevorzugt in einem Schacht am Ende einer Druckleitung, in die Abwasserdruckleitung eingefügt, so daß keine zusätzlichen Bauarbeiten vorgenommen werden müssen. Da ferner keine zusätzlichen Kompressoren, Pumpen o. dgl. benötigt werden, arbeitet die erfindungsgemäße Vorrichtung vollkommen wartungsfrei und ohne zusätzlichen Energiebedarf. Die stromabwärts von dem Saugrohr angebrachte Wirbelstrecke bringt die angesaugte Luft innig mit den im Abwasser enthaltenen Stoffen in Verbindung. Zu diesem Zweck wird das Wasser intensiv verwirbelt und dabei die aufgenommene Luft fein im Abwasser verteilt, so daß ein intensiver biologischer Abbau gewährleistet ist.

Gemäß einem bevorzugten Ausführungsbeispiel enthält die Wirbelstrecke unmittelbar stromabwärts hinter dem Saugrohr einen Krümmer, der einen in Stromrichtung zunehmenden Querschnitt aufweist, an welchen sich die offene Fallstrecke anschließt. Der Krümmer besitzt im Bereich seiner konvexen Krümmung eine Ausbuchtung, an der eine erste Verwirbelung des Luft/Abwassergemischs stattfindet. Anschließend wird das Abwasser vom Ausgang des Krümmers entweder über ein Flügelrad oder direkt in eine Fallstrecke gegeben, die einander gegenüberliegende Wandabschnitte mit Umlenkprofilen besitzt. Beim Durchlaufen der Fallstrecke wird das Abwasser zwischen den Umlenkprofilen der Wandabschnitte hin und her geführt, um die Reaktionsstrecke zu verlängern und durch den mehrfachen Aufprall die Luft bzw. den Sauerstoff fein zerteilt in das Abwasser einzuschlagen.

Alternativ besteht die Wirbelstrecke aus einem am Saugrohr angeflanschten, sich stromabseitig weitenden, offenen Leitkegel, der axial einwärts gerichtete Leitbleche enthält, welche das mit relativ hoher Geschwindigkeit auftreffende Abwasser/Luftgemisch verwirbeln und die Luft fein zerteilt in das Abwasser schlagen. Die Leitbleche führen das Abwasser/Luftgemisch zentral auf einen rotationssymmetrischen Prallkörper, längs dessen Oberfläche das Abwasser/Luftgemisch herabströmt und durch Leitblechanordnungen erneut verwirbelt wird. Anschließend wird das Abwasser/Luftgemisch vom Prallkörper freifallend an den abgehenden Kanal abgegeben.

Bevorzugt verlaufen die Saugöffnungen des Saugrohrs unter einem spitzen Winkel zur Strömungsachse und weisen einen Kreisquerschnitt auf. Um eine möglichst gleichförmige Einströmung der angesaugten Luft zu gewährleisten, sind an der Außenseite des Saugrohrs Saugstutzen angebracht, welche die Saugöffnungen axial nach außen verlängern.

Besonders bevorzugt weist das Saugrohr die Form eines sich in Strömungsrichtung bis zur Verengung hin verjüngenden ersten Kegelabschnitts und anschließend eines sich in Strömungsrichtung erweiternden zweiten Kegelabschnitts auf. Die Saugöffnungen sind bevorzugt alle im zweiten Kegelabschnitt angeordnet. Der Querschnitt des Saugrohrs ist bevorzugt am stromaufseitigen und am stromabseitigen Ende gleichgroß.

Das Saugrohr und die Wirbelstrecke wird in einem Kanalschacht am Ende einer Druckleitung des Abwassersystems angebracht. Das Saugrohr wird vertikal ausgerichtet und ist stromaufseitig mit einem Verbindungsrohr außerhalb des Schachts an den Kanal angeschlossen, der etwa in Höhe der Kanalsohle ankommt. Das Verbindungsrohr weist eine Steigstrecke auf, in der das Abwasser mindestens 1 m vom Kanalanschluß angehoben und dann an das Saugrohr abgegeben wird. Das Abwasser durchläuft das Saugrohr, saugt eine möglichst große Menge an Luft an und wird dann in der Wirbelstrecke im Schacht verwirbelt und von der Wirbelstrecke offen — innerhalb des Schachts — zu dem abgehenden Kanal geleitet. Die erforderliche Anhebung des Wassers in der Steigstrecke wird von der Pumpe an der stromaufseitigen Öffnung der Druckleitung bewirkt, ein separates Pump- oder Kompressoraggregat ist für die erfindungsgemäße Vorrichtung nicht erforderlich.

Bevorzugt wird das Saugrohr in einem Luftkanal angeordnet, dessen Einlaßöffnung mit der Erdoberfläche in Verbindung steht. Dadurch ist sichergestellt, daß nur sauerstoffhaltige Außenluft durch die Saugöffnungen in das Abwasser gelangen. Die im Schacht befindliche, sauerstoffarme Luft gelangt nicht in die Saugöffnungen.

Im folgenden werden Ausführungsbeispiele der Erfindung anhand der Zeichnung näher erläutert. Es zeigt

Fig. 1 eine Ansicht des Saugrohrs teilweise im Schnitt,

Fig. 2 eine erste Ausführungsform der Anordnung in einem Kanalschacht,

Fig. 3 eine zweite Ausführungsform der Anordnung in einem Kanalschacht und

Fig. 4 eine dritte Ausführungsform der Anordnung in einem Kanalschacht.

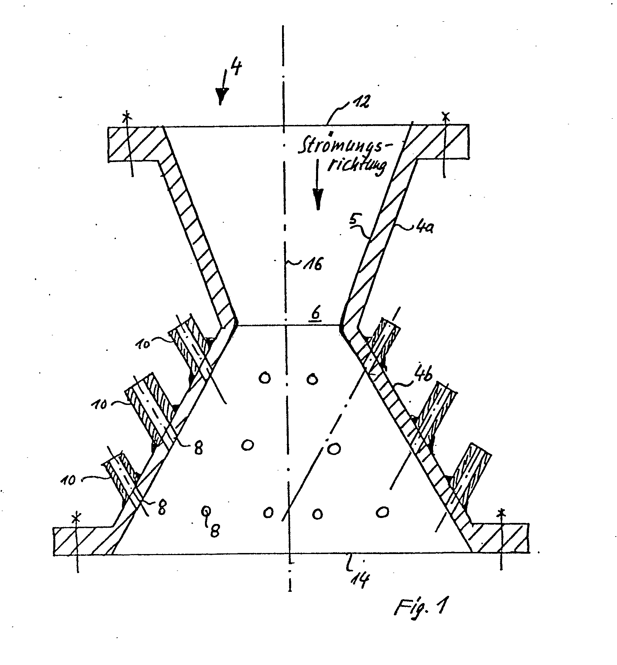

Fig. 1 zeigt eine Ausführungsform des Saugrohrs für die Vorrichtung. Die Innenwand 5 des Saugrohrs 4 hat eine rotationssymmetrische Form mit einer stromaufseitigen Öffnung 12 und einer stromabseitigen Öffnung 14 senkrecht zur Symmetrieachse 16. Das Saugrohr weist eine Verengung 6 auf, die an der Nahtstelle zweier miteinander verbundener Kegelstümpfe entsteht. Die stromaufseitige Öffnung 12 bildet die Basis eines sich in Strömungsrichtung verjüngenden ersten Kegelabschnitts 4a, an den sich ein in Strömungsrichtung erweiternder zweiter Kegelabschnitt 4b anschließt, dessen Basis die stromabseitige Öffnung 14 ist. Die Wand des zweiten Kegelabschnitts 4b ist mit Saugöffnungen 8 durchsetzt, die in mehreren Kränzen am Umfang des Saugrohrs angeordnet sind und unter einem spitzen Winkel zur Strömungsrichtung verlaufen.

Vor jede Saugöffnung 8 ist ein Saugstutzen 10 gesetzt, der die Saugöffnung 8 axial nach außen verlängert, so daß die angesaugte Luft oder der Sauerstoff vor dem Eintritt in den Strömungspfad einen längeren Saugkanal durchläuft. Wesentlich ist es dabei, daß die Saugöffnungen bündig mit der Innenwand des Saugrohrs 4 abschließen, daß also keine in den Strömungspfad hineinragenden Teile die Strömung des Abwassers beeinträchtigen.

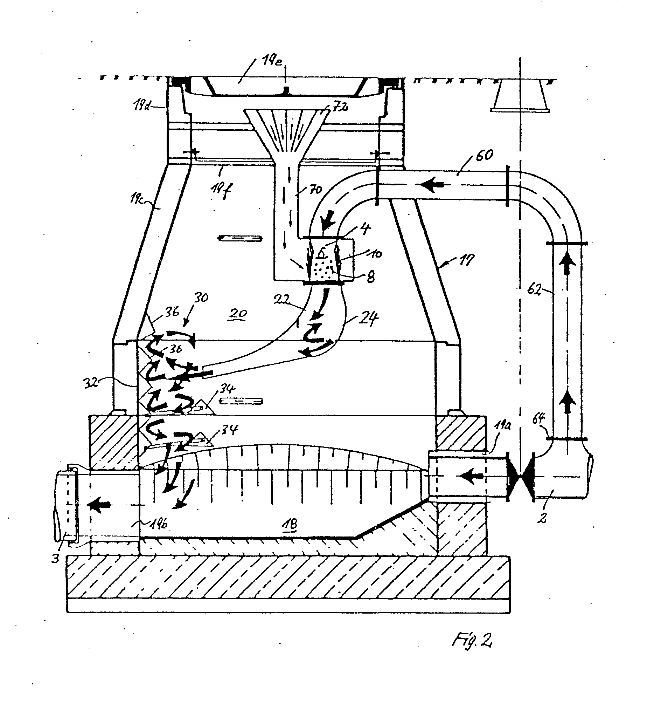

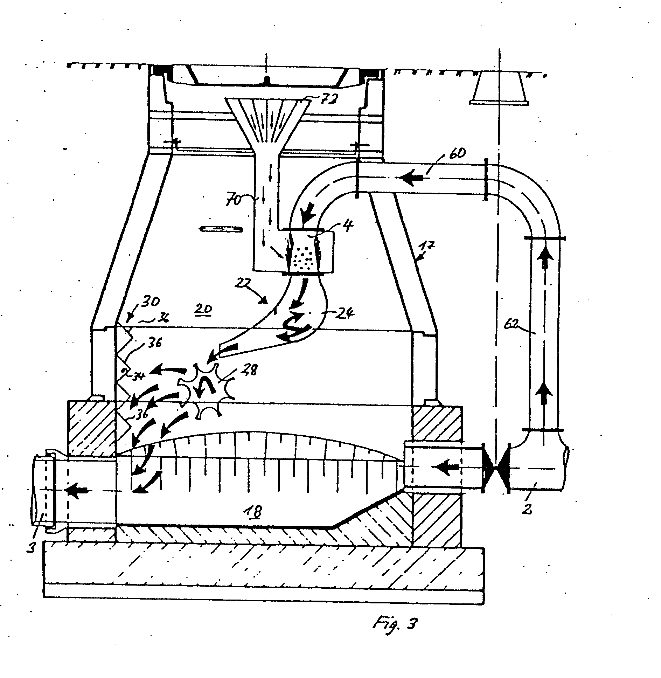

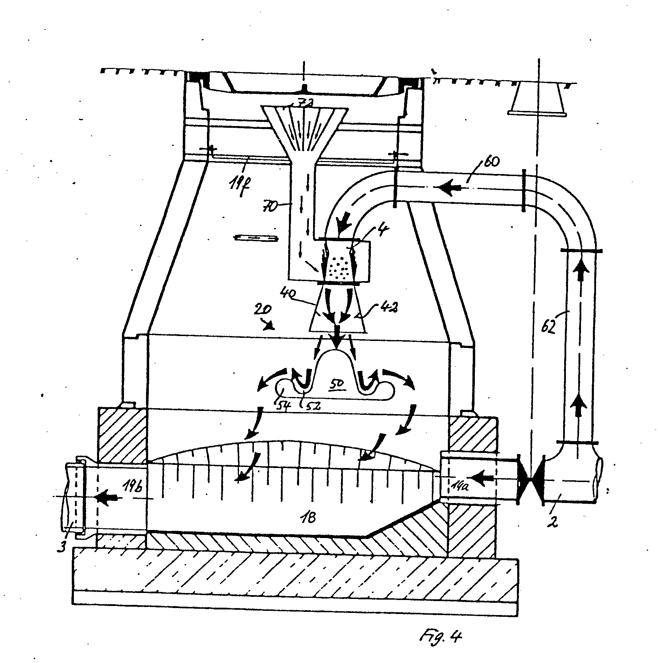

Fig. 2 zeigt einen Schacht 17, der am Ende einer Abwasserdruckleitung 2 in das Erdreich eingelassen ist und eine Schachtsohle 18 mit einem Einlaß 19a am Ende der Druckleitung oder der ankommenden Abwasserdruckleitung 2 und einen Auslaß 19b an der abgehenden Abwasserdruckleitung 3 aufweist. Auf die Schachtsohle 18 ist eine mindestens abschnittweise kegelförmige Haube 19c aufgesetzt, die an ihrem oberen Ende in einen Zylinderabschnitt 19d mündet, auf den, mit der Straßenfläche abschließend, ein Deckel 19e aufgesetzt ist. Der Aufbau des Schachts ist in den Ausführungsformen gemäß den Fig. 3 und 4 derselbe.

Im kegelförmigen Abschnitt der Haube 19c des Schachts ist ein Saugrohr 4 mit vertikal ausgerichteter Achse angeordnet und stromaufseitig an ein Verbindungsrohr 60 angeflanscht, welches am stromaufseitigen Ende einen Fall- oder Steigabschnitt 62 besitzt und mit dem stromaufseitigen Ende an der ankommenden Abwasserdruckleitung 2 angeflanscht ist. Die Steighöhe von der Achse der Abwasserdruckleitung 2 bis zu dem höchsten Punkt des Verbindungsrohrs 60 beträgt 1,2 m oder mehr. Das Verbindungsrohr 60 hat die Form eines umgekehrten U, von dem ein Schenkel durch den Steigabschnitt 62 gebildet ist, und dessen anderer Schenkel abgeschnitten und durch das relativ kurze Saugrohr 4 ersetzt ist. Um die Verbindung vom Innenraum des Schachts 17 zu der außen etwa an der Schachtsohle 18 ankommenden Abwasserdruckleitung 2 herstellen zu können, muß die Haube 19c des Schachts durchbrochen werden.

Um das Saugrohr 4 ist ein Luftkanal 70 herumgelegt, der in einen vertikalen Abschnitt, und anschließend in eine sich weitende Einlaßöffnung 72 übergeht, die in vorgegebenem Abstand unter dem Deckel 19e des Schachts 17 sitzt. Der Luftkanal 70 führt den Saugöffnungen 8 des Saugrohrs 4 Frischluft zu, die durch den Deckel 19e von außen in den Luftkanal 70 einströmt. Der Luftkanal 70 wird im Schacht von einer Halterung 19f gehalten.

An der stromabseitigen Öffnung 14 des Saugrohrs 4 ist ein Krümmer 22 angeflanscht, der in Strömungsrichtung einen zunehmenden Querschnitt und eine Ausbuchtung 24 im Bereich seiner konvex gekrümmten Wandung aufweist. Der Querschnitt des Verbindungsrohrs 60, des Saugrohrs 4 und der stromaufseitigen Öffnung des Krümmers 22 ist kreisförmig; der Krümmer 22 geht jedoch an seinem stromabseitigen Ende in der dargestellten Ausführungsform zur Erzeugung eines Flachstrahls in einen flachen, rechteckförmigen Querschnitt über.

Das stromabseitige Ende des Krümmers 22 gibt das Abwasser auf eine offene Fallstrecke 40, die einander beabstandet gegenüberliegenden Umlenkprofile 34 aufweist, die auf der einen Seite an einem inneren Wandabschnitt 32 des Schachts 17 angeordnet sind. Die Umlenkprofile 34 haben schräg abwärts geneigte Umlenkflächen 36, von denen der Wasserstrahl gelenkt wird. Die Fallstrecke ist im wesentlichen vertikal ausgerichtet und gibt an ihrem unteren Ende das Abwasser an den Auslaß 19b der abgehenden Abwasserdruckleitung 3 ab.

Fig. 3 zeigt eine der Fig. 2 weitgehend entsprechende Ausführungsform der Anordnung bei der das stromabseitige Ende des Krümmers 22 verkürzt ist, um zwischen Krümmer 22 und der Fallstrecke 30 in den Abwasserstrahl ein Flügelrad 28 einzubauen, welches vom Abwasserstrahl bewegt wird und den Lufteintrag und die Luftverteilung im Abwasser weiter fördern soll. Das Flügelrad gibt das Abwasser dann an die Fallstrecke 30 ab, die in Fig. 3 nur aus auf die Innenwand des Schachts aufgesetzten Umlenkprofilen 34 mit schräg abwärts laufenden Umlenkflächen 36 besteht. Das Abwässer fällt zwischen Flügelrad und Fallstrecke nach unten in den Auslaß 19b der abgehenden Abwasserdruckleitung 3.

Fig. 4 zeigt eine dritte Ausführungsform der Anordnung. Der Aufbau des Schachts sowie der Anschluß des Saugrohrs 4 über das Verbindungsrohr 60 an die Abwasserdruckleitung 2 entsprechen dem Aufbau der Fig. 2 und 3. Am stromabseitigen Ende des Saugrohrs 4 ist anstelle eines Krümmers ein sich stromabwärts aufweitender offener Leitkegel 40 angeflanscht, der axial einwärts gerichtete Leitbleche 42 aufweist, auf die das Abwasser/Luftgemisch aufschlägt und dabei erstmalig eine Vermischung erfährt. Durch die Leitbleche 42 wird das Abwasser/Luftgemisch ebenfalls auf das Zentrum eines Prallkörpers 50 gelenkt, der in vorgegebenem Abstand unter dem stromabseitigen Ende des Leitkegels 40 sitzt. Der Prallkörper 50 ist ein Rotationskörper mit einem erhabenen Zentrum, an das sich eine Umfangsnut ein anschließender Randwulst 54 anschließt. Die Oberfläche des Prallkörpers 50, insbesondere die Umfangsnut und der Randwulst 54 stellen eine »Leitblechanordnung« 52 dar, die das Abwasser geeignet bewegen und dabei die im Saugrohr 4 angesaugte Luft im Abwasser fein verteilen sollen. Das über den Randwulst 54 strömende Abwasser fällt frei auf die Schachtsohle 18 und wird dann an den Auslaß 19b der abgehenden Abwasserdruckleitung 3 geleitet.

Bei allen Ausführungsformen gemäß Fig. 2 bis 4 ist die gesamte Belüftungseinrichtung an dem stromabseitigen oder schachtseitigen Flansch des Verbindungsrohrs 60 mit einer Schnellkupplung ankoppelbar und kann ebenso wie auch das die Halterung 19f bildende Zwischenblech dadurch mit einem Handgriff aus dem Schacht entfernt werden. Dadurch werden die Wartungs- und Reinigungsmöglichkeiten für die anschließende Gefälleleitung nicht behindert.

Neben dem Einsatz in Abwasserkanalsystemen eignet sich die Anordnung auch zur Verwendung in Abwasserkläranlagen, insbesondere bei der Übergabe des Abwassers von einem Becken in ein nachfolgendes Becken und zur Belüftung von Rückströmen in Kläranlagen.

**Patentansprüche**

1. Anordnung zur Belüftung des häuslichen und/oder industriellen Abwassers in der Abwasserdruckleitung eines Abwassersystems oder einer Kläranlage mit einer eine Verengung und eine Ansaugöffnung in der Abwasserdruckleitung aufweisenden Vorrichtung, wobei die Ansaugöffnung aus mehreren am Umfang eines Saugrohres verteilten Saugöffnungen besteht, dadurch gekennzeichnet, daß die Ansaugöffnung stromabwärts hinter der Verengung (6) in dem das Ende der Abwasserdruckleitung bildenden, einsetzbaren Saugrohr (4) angeordnet ist und sich stromabwärts hinter dem Saugrohr eine Wirbelstrecke (20) zur Verteilung der angesaugten Luft an die Abwasserdruckleitung (2) sowie hinter der Wirbelstrecke (20) eine offene Fallstrecke (30) anschließt.

2. Anordnung nach Anspruch 1, dadurch gekennzeichnet, daß die Wirbelstrecke (20) unmittelbar stromabwärts hinter dem Saugrohr (4) einen Krümmer (22) mit in Stromrichtung zunehmendem Querschnitt enthält, an welchen sich die offene Fallstrecke (30) anschließt.

3. Anordnung nach Anspruch 2, dadurch gekennzeichnet, daß der Krümmer (22) eine Ausbuchtung (24) in seinem konvex gekrümmten Wandungsbereich aufweist.

4. Anordnung nach einem der Ansprüche 1 bis 3, dadurch gekennzeichnet, daß die Fallstrecke (30) einander gegenüberliegende Wandabschnitte (32) mit Umlenkprofilen (34) aufweist.

5. Anordnung nach Anspruch 4, dadurch gekennzeichnet, daß die Fallstrecke (30) vertikal angeordnet ist, und daß die Umlenkprofile (34) schräg abwärts geneigte Umlenkflächen (36) aufweisen.

6. Anordnung nach einem der Ansprüche 2 bis 5, dadurch gekennzeichnet, daß zwischen dem Auslaß (26) des Krümmers (22) und dem Beginn der Fallstrecke (30) ein Flügelrad oder eine Flügelwalze (28) in den Abwasserstrahl eingefügt ist.

7. Anordnung nach Anspruch 1, dadurch gekennzeichnet, daß die Wirbelstrecke (20) unmittelbar stromab vom Saugrohr (4) einen stromabwärts sich weitenden, offenen Leitkegel (40) aufweist, der axial einwärts gerichtete Leitbleche (42) enthält und das Abwasser zentral auf einen rotationssymmetrischen Prallkörper (50) abgibt, der auf seiner Oberfläche eine Leitblechanordnung (52) zum Verwirbeln und anschließenden Abgeben des Abwassers im freien Fall an die Abwasserdruckleitung (2) enthält.

8. Anordnung nach einem der vorstehenden Ansprüche, dadurch gekennzeichnet, daß die Saugöffnungen (8) des Saugrohrs einen Kreisquerschnitt aufweisen und unter einem spitzen Winkel zur Strömungsrichtung verlaufen.

9. Anordnung nach einem der vorstehenden Ansprüche, dadurch gekennzeichnet, daß die Saugöffnungen (8) in am Saugrohr (4) angesetzten Saugstutzen (10) axial nach außen verlängert sind.

10. Anordnung nach einem der vorstehenden Ansprüche, dadurch gekennzeichnet, daß das Saugrohr (4) einen Kreisquerschnitt aufweist, dessen Durchmesser in Strömungsrichtung bis zur Verengung (6) hin stetig abnimmt und nach der Verengung (6) stetig zunimmt.

11. Anordnung nach Anspruch 10, dadurch gekennzeichnet, daß das Saugrohr (4) die Form eines im Strömungsrichtung sich verjüngenden ersten Kegelabschnitts (4a) und anschließend eines sich in Strömungsrichtung erweiternden zweiten Kegelabschnitts (4b) aufweist und daß die Saugöffnungen (8) und Saugstutzen (10) alle im zweiten Kegelabschnitt (4b) angeordnet sind.

12. Anordnung nach Anspruch 11, dadurch gekennzeichnet, daß der Querschnitt des Saugrohrs (4) am stromaufseitigen und am stromabseitigen Ende gleich groß ist.

13. Anordnung nach einem der vorstehenden Ansprüche, dadurch gekennzeichnet, daß stromaufwärts vor dem Saugrohr (4) ein Verbindungsrohr (60) angeordnet ist, welches das Saugrohr (4) mit vertikal ausgerichteter Achse an die Abwasserdruckleitung (2) anschließt.

14. Anordnung nach Anspruch 13, dadurch gekennzeichnet, daß das Verbindungsrohr (60) einen Steigabschnitt (62) aufweist, dessen stromabseitiges Ende mindestens 1 m über dem stromaufseitigen Ende (64) des Verbindungsrohrs (60) liegt.

15. Anordnung nach einem der vorstehenden Ansprüche, dadurch gekennzeichnet, daß das Saugrohr (4) in einem Luftkanal (70) angeordnet ist, dessen Einlaßöffnung (72) mit der Erdoberfläche in Verbindung steht.

16. Anordnung nach einem der vorstehenden Ansprüche, dadurch gekennzeichnet, daß das Saugrohr (4) und die Wirbelstrecke (20) in einem Kanalschacht am Ende einer Druckleitung angeordnet ist, daß das Saugrohr (4) vertikal ausgerichtet ist und stromaufseitig mit der an der Schachtsohle ankommenden Abwasserdruckleitung (2) außerhalb des Schachts verbunden ist, und daß die Wirbelstrecke (20) das Abwasser stromabseitig innerhalb des Schachts in die abgehende Abwasserdruckleitung (3) abgibt.

**Claims**

1. Arrangement for ventilating the domestic and/or industrial sewage in the sewage pressure line of a sewage system or a sewage-treatment plant with a means comprising a constriction and an intake opening in the sewage pressure line, the intake opening consisting of a plurality of suction openings distributed on the periphery of a suction pipe, wherein the intake opening is arranged downstream behind the constriction (6) in the insertable suction pipe (4) forming the end of the sewage pressure line and a vortex section (20) is connected downstream following the suction pipe and for distributing the air which is drawn in to the sewage pressure line (2) and an open down section (30) is connected following the vortex section (20).

2. Arrangement according to claim 1, wherein the vortex section (20) contains a bend or elbow (22) immediately following the suction pipe (4) in the downstream direction, which elbow has a cross-section increasing in the direction of flow and to which is connected the open down section (30).

3. Arrangement according to claim 2, wherein the elbow (22) comprises a bulge (24) in its convexly curved wall region.

4. Arrangement according to one of claims 1 to 3, wherein the down section (30) comprises wall sections (32) facing one another and with deflecting profiles (34).

5. Arrangement according to claim 4, wherein the down section (30) is arranged vertically and wherein the deflecting profiles (34) comprise deflecting surfaces (36) which slope obliquely downwards.

6. Arrangement according to one of claims 2 to 5, wherein an impeller wheel or roller (28) is introduced into the sewage stream between the outlet of the elbow (22) and the start of the down section (30).

7. Arrangement according to claim 1, wherein the vortex section (20), immediately downstream of the suction pipe (4), comprises an open deflector cone (40) which opens out in the downstream direction and which comprises deflecting plates (42) directed axially inwards and delivers the sewage centrally on to an axially symmetrical baffle member (50), which contains on its surface a guide plate arrangement (52) for whirling and subsequently delivering the sewage in free fall to the sewage pressure line (2).

8. Arrangement according to one of the preceding claims, wherein the suction openings (8) of the suction pipe are of circular cross-section and extend at an acute angle in relation to the direction of flow.

9. Arrangement according to one of the preceding claims, wherein the suction openings (8) in suction nozzles (10) fitted on the suction pipe (4) are extended axially outwards.

10. Arrangement according to one of the preceding claims, wherein the suction pipe (4) is of circular cross-section, the diameter of the pipe in the direction of flow decreasing steadily as far as the constriction (6) and increasing steadily after the constriction (6).

11. Arrangement according to claim 10, wherein the suction pipe (4) has the form of a first conical section (4a) narrowing in the direction of flow and thereafter a second conical section (4b) widening out in the direction of flow and wherein the suction openings (8) and suction nozzles (10) are all arranged in the second conical section (4b).

12. Arrangement according to claim 11, wherein the cross-section of the suction pipe (4) is of the same size at the upstream end and at the downstream end.

13. Arrangement according to one of the preceding claims, wherein a connecting pipe (60) is arranged upstream before the suction pipe (4), which connecting pipe connects the suction pipe (4) with a vertically directed axis to the sewage pressure line (2).

14. Arrangement according to claim 13, wherein the connecting pipe (60) comprises a rising section (62), of which the downstream end is at least 1 m above the upstream end (64) of the connecting pipe (60).

15. Arrangement according to one of the preceding claims, wherein the suction pipe (4) is arranged in an air duct (70), the inlet opening (72) of which is in communication with the ground surface.

16. Arrangement according to one of the preceding claims, wherein the suction pipe (4) and the vortex section (20) are arranged in a manhole at the end of the pressure line, wherein the suction pipe (4) is directed vertically and is connected on the upstream side to the sewage pressure line (2) reaching the bottom of the manhole and externally of the latter, and wherein the vortex section (20) delivers the sewage on the downstream side and inside the manhole into the outgoing sewage pressure line (3).

**Revendications**

1. Dispositif pour l'aération des eaux résiduaires domestiques et/ou industrielles dans la conduite de refoulement d'eaux résiduaires d'un réseau d'eaux résiduaires ou d'une installation de clarification avec un appareil présentant un rétrécissement et une ouverture d'aspiration dans la conduite de refoulement d'eaux résiduaires, l'ouverture d'aspiration étant constituée par plusieurs orifices d'aspiration répartis sur la face latérale d'un tube d'aspiration, caractérisé en ce que l'ouverture d'aspiration est disposée en aval après le rétrécissement (6) dans le tube d'aspiration à insérer (4) formant l'extrémité de la conduite de refoulement d'eaux résiduaires, un trajet de turbulence (20) pour répartir l'air aspiré dans la conduite de refoulement d'eaux résiduaires (2) se raccordant en aval après le tube d'aspiration ainsi que, après le trajet de turbulence (20), un trajet de chute ouvert (30).

2. Dispositif selon la revendication 1, caractérisé en ce que le trajet de turbulence (20) contient immédiatement en aval du tube d'aspiration (4), un coude 22 avec une section croissant dans le sens d'écoulement, auquel se raccorde le trajet de chute ouvert (30).

3. Dispositif selon la revendication 2, caractérisé en ce que le coude (22) présente un renflement (24) dans sa zone de paroi à courbure convexe.

4. Dispositif selon l'une des revendications 1 à 3, caractérisé en ce que le trajet de chute (30) comporte des parties de parois (32) opposées l'une à l'autre avec des profils déflecteurs (34).

5. Dispositif selon la revendication 4, caractérisé en ce que le trajet de chute (30) est disposé verticalement et en ce que les profils déflecteurs (34) présentent des faces déflectrices (36) inclinées obliquement vers le bas.

6. Dispositif selon l'une des revendications 2 à 5, caractérisé en ce qu'une roue à aubes ou un cylindre à aubes (28) sont insérés dans le jet d'eaux résiduaires entre la sortie (26) du coude (22) et le début de trajet de chute (30).

7. Dispositif selon la revendication 1, caractérisé en ce que le trajet de turbulence (20) comporte, immédiatement en aval du tube d'aspiration (4) un cône directeur ouvert (40) s'élargissant vers l'aval, qui contient des tôles directrices (42) dirigées vers l'intérieur en direction axiale qui envoient les eaux résiduaires vers l'axe sur un corps d'impact de révolution (50) qui présente sur sa surface un agencement de tôles directrices (52) pour la mise en turbulence et ensuite l'envoi des eaux résiduaires en chute libre dans la conduite de refoulement d'eaux résiduaires (2).

8. Dispositif selon l'une des revendications précédentes, caractérisé en ce que les orifices d'aspiration (8) du tube d'aspiration présentent une section circulaire et s'étendent suivant un angle aigu par rapport à la direction d'écoulement.

9. Dispositif selon l'une des revendications précédentes, caractérisé en ce que les orifices d'aspiration (8) sont prolongés en direction axiale vers l'extérieur par des tubulures d'aspiration (10) montées sur le tube d'aspiration (4).

10. Dispositif selon l'une des revendications précédentes, caractérisé en ce que le tube d'aspiration (4) présente une section circulaire dont le diamètre décroît constamment dans le sens d'écoulement jusqu'au rétrécissement (6) et croît constamment après le rétrécissement.

11. Dispositif selon la revendication 10, caractérisé en ce que le tube d'aspiration (4) présente la forme d'un premier élément de cône (4a) allant en se rétrécissant dans le sens d'écoulement et ensuite d'un second élément de cône (4b) allant en s'élargissant dans le sens d'écoulement et en ce que les orifices d'aspiration (8) et les tubulures d'aspiration (10) sont tous disposés dans le second élément de cône (4b).

12. Dispositif selon la revendication 11, caractérisé en ce que la section du tube d'aspiration (4) est de même grandeur à l'extrémité côté amont et à l'extrémité côté aval.

13. Dispositif selon l'une des revendications précédentes, caractérisé en ce qu'un tube de raccord (60) est disposé en amont avant le tube d'aspiration (4) qui raccorde le tube d'aspiration (4) avec un axe dirigé verticalement à la conduite de refoulement d'eaux résiduaires (2).

14. Dispositif selon la revendication 13, caractérisé en ce que le tube de raccord (60) comporte un tronçon montant (62) dont l'extrémité côté aval se trouve au moins à 1 m plus haut que l'extrémité amont (64) du tube de raccord (60).

15. Dispositif selon l'une des revendications précédentes, caractérisé en ce que le tube d'aspiration (4) est disposé dans un conduit d'air (70) dont l'ouverture d'entrée (72) est en liaison avec la surface du sol.

16. Dispositif selon l'une des revendications précédentes, caractérisé en ce que le tube d'aspiration (4) et le trajet de turbulence (20) sont disposés dans un regard de conduit à l'extrémité d'une conduite de refoulement, en ce que le tube d'aspiration (4) est dirigé verticalement et est relié côté amont à la conduite de refoulement d'eaux résiduaires arrivant sur le radier du regard, et en ce que le trajet de turbulence (20) envoie les eaux résiduaires côté aval, à l'intérieur du regard, dans la conduite sous pression (3) de départ des eaux résiduaires.

Fig. 1

Fig. 2

Fig. 3

Fig. 4